# EUROPEAN PATENT APPLICATION

(11) **EP 3 366 142 A1**
(43) Date of publication of application: **29.08.2018**
(21) Application number: 17158420.4
(22) Date of filing: 28.02.2017
(51) Int. Cl.: A23C 3/033

(54) **METHOD FOR TREATING AN ORGANIC FLUID, IN PARTICULAR MILK**

(71) Applicant: De Jong Beheer B.V., 9423 PJ Hoogersmilde (NL)
(72) Inventor: De Jong, Klaas, 9423 PJ Hoogersmilde (NL); Ras, Willem, 8300-054 Silves (PT)
(74) Representative: 't Jong, Bastiaan Jacob

(57) **Abstract**

The invention relates to a method for treating an organic fluid, in particular milk, which method comprises the steps of:
- providing an electrical coil and creating an electrical field by bringing the coil in resonance with a direct current having an alternating current component;
- positioning a container with an organic fluid, in particular milk, in the electrical field of the coil;
wherein the alternating current component has a frequency in the range of 183kHz - 192kHz and wherein the direct current is in the range of 55% - 100% of the amplitude of the alternating current component.

## Description

The invention relates to a method for treating an organic fluid, in particular milk.

Organic fluids, such as juices and in particular milk, are subjected to pasteurization in order to kill bacteria and to increase the shelf life of the organic fluid.

The pasteurization process comprises a step in which the organic fluid is heated to temperatures as high as 140°C. Although such heating is performed shortly, for example 15 seconds, the different proteins and peptides are denatured and enzymes are disabled.

A number of proteins have a three dimensional structure, which is altered by the heating step of the pasteurization process into a linear structure. The three dimensional structure is thus destroyed by the pasteurization process and linear epitopes are generated. It is believed that these epitopes can cause allergic reactions at humans, in popular language called "LACTOSE INTOLERANCE".

It is known to add the enzyme lactase to pasteurized milk in order to improve the taste and reduce the allergic reactions. However, the production of the lactase is costly and would increase the costs of pasteurized milk.

It is an object of the invention to provide a different method to treat an organic fluid, in particular pasteurized milk.

This object is achieved with a method comprising the steps of:
- providing an electrical coil and creating an electrical field by bringing the coil in resonance with a direct current having an alternating current component;
- positioning a container with an organic fluid, in particular milk, in the electrical field of the coil;
wherein the alternating current component has a frequency in the range of 183kHz - 192kHz and wherein the direct current is in the range of 55% - 100% of the amplitude of the alternating current component.

It is believed that by subjecting the organic fluid, in particular milk to an electrical field caused by the coil that has been brought in resonance by a direct current with alternating current component, wherein the alternating current component has a frequency and the direct current has a value as defined by the invention, the linear epitopes generated by the pasteurization process are altered such that less or no allergic reactions are caused.

The theory is that the specific frequency range of 183 kHz - 192 kHz in combination with the offset of the direct current causes the proteins, damaged by the pasteurization process, to vibrate and so changing the proteins to a shape, which no longer stimulates allergic reactions.

In a preferred method according to the invention the alternating current component has a frequency of 187.555 kHz. In relation to pasteurized milk, this frequency results in the most effective way to reduce the negative effects of the pasteurization of milk.

In a further preferred embodiment of the method according to the invention the value of the direct current is 100% of the amplitude of the alternating current component.

It is also preferred when the voltage of the direct current is in the range of 5V - 10V, preferably 7,5V.

This further contributes to an effective treatment of pasteurized milk in order to reduce the allergic effects.

In yet another embodiment of the method according to the invention the wave-shape of the alternating current component is sinusoidal. A sinusoidal alternating current component stimulates best the vibrations of the proteins, such that the power provided to the coil is optimally used.

The invention also relates to a device for treating an organic fluid, in particular milk, which device comprises:
- a container for containing the organic fluid;
- a coil positioned adjacent to container, such that at least part of the electrical field of the coil extends through the container
- resonance means for bringing the coil in resonance according to the method of the invention.

With the device according to the invention, a user can easily treat an organic fluid, such as pasteurized milk, by pouring the fluid in the container and then have the resonance means bring the coil in resonance according to the method of the invention. The coil will ensure that an electrical field is generated in the fluid.

In a preferred embodiment of the device according to the invention the coil is a flat coil arranged to a support surface and wherein the container is positioned on the support surface.

With this embodiment according to the invention a table top device is provided on which a glass of milk or related milk products like chocolate cakes etc. can be treated, or ten or more standard carton milk/yoghurt containers.

In another preferred embodiment of the device according to the invention the container is arranged on the inside of the coil.

In combination with the features that the container has a cylindrical wall and the coil is arranged on or in the cylindrical wall, the container can be reusable, while the coil is integrated into the container.

In yet another preferred embodiment of the device according to the invention the container is a ready to ship trolley filled with carton milk/ or other related milk products, like yoghurt/etc.

These and other features of the invention will be elucidated in conjunction with the accompanying drawings.
Figure 1 shows a schematic view of a first embodiment of the device according to the invention.
Figure 2 shows a diagram of the electrical direct current with alternating current component wave fed to the coil of figure 1.
Figure 3 shows a schematic view of a second embodiment of the device according to the invention.
Figure 4 shows a schematic view of a third embodiment of the device according to the invention.

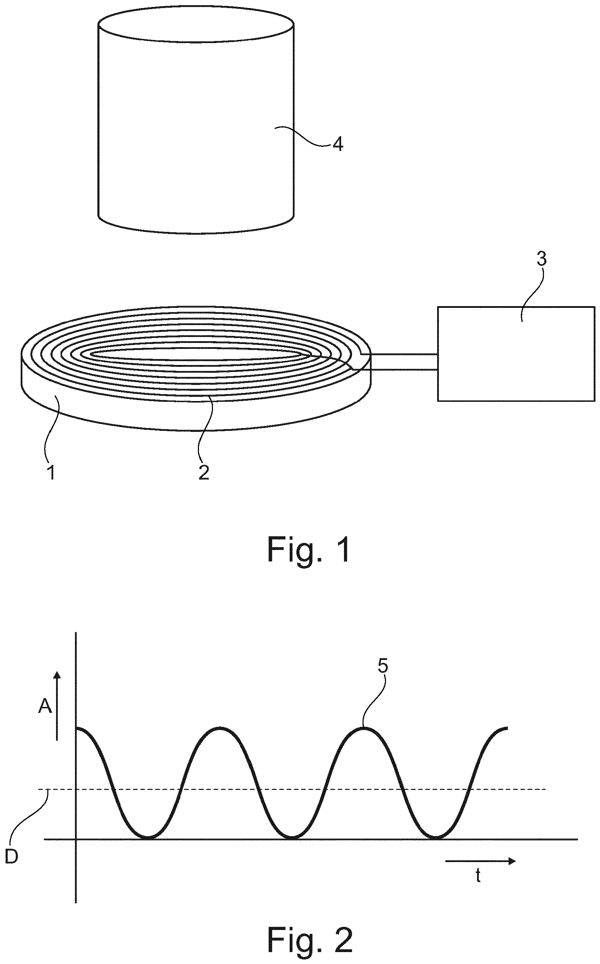

Figure 1 shows a support table 1 in which a flat coil 2 is integrated. The coil 2 is brought in resonance by resonance means 3, which supply the coil 2 with a direct current with alternating current component wave. A container 4 with an organic fluid, such as milk, can be placed on top of the table 1.

The resonance means 3 will then supply the coil 2 with a direct current with alternating current component wave, which causes the coil 2 to generate an electrical field, which in turn will reduce the allergic properties of the organic fluid, such as pasteurized milk.

The wave-shape of the current is shown in figure 2. The current 5 has a sinusoidal shape. The current 5 has a direct current D, which is, in this embodiment, equal to 100% of the amplitude of the sinusoidal shape of the alternating current component.

The timing t of the current is such that the frequency of the current 5 is in the range of 183kHz - 192kHz.

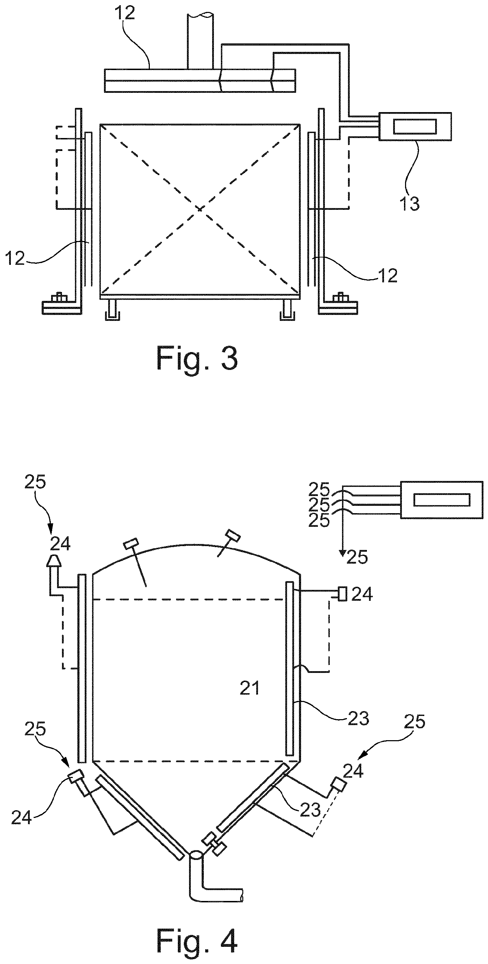

Figure 3 shows a second embodiment 10 of the device according to the invention. The device 10 is a ready to ship trolley loaded with pasteurized milk/related products/containers which is brought between aside/top mounted coil(s) 12. This coil 12 drives means 13, which operate in similar way as the driving means 3 as described in relation to figure 1. The milk or related products are treated and the allergic properties are reduced to less or non.

Figure 4 shows a third embodiment 20 of a device according to the invention. The device 20 comprises a tank 21 A coil 23 is integrated in the wall of the tan 21 and provided with a socket 24 to which a connection lead 25 can be connected.

This provides for a container, which can be used daily and which allows treating any organic fluid poured into the bottle 21 by connecting the lead 25 and driving the coil 23 according to the method of the invention.

## Claims

1. Method for treating an organic fluid, in particular milk, which method comprises the steps of:
- providing an electrical coil and creating an electrical field by bringing the coil in resonance with a direct current having an alternating current component;
- positioning a container with an organic fluid, in particular milk, in the electrical field of the coil;
wherein the alternating current component has a frequency in the range of 183kHz - 192kHz and wherein the direct current is in the range of 55% - 100% of the amplitude of the alternating current component.

2. Method according to claim 1, wherein the alternating current component has a frequency of 187.555 kHz.

3. Method according to claim 1 or 2, wherein the direct current is 100% of the amplitude of the alternating current component.

4. Method according to any of the preceding claims, wherein the voltage of the direct current is in the range of 5V - 10V, preferably 7,5V.

5. Method according to any of the preceding claims, wherein the wave-shape of the alternating current component is sinusoidal.

6. Device for treating an organic fluid, in particular milk, which device comprises:
- a container for containing the organic fluid;
- a coil positioned adjacent to container, such that at least part of the electrical field of the coil extends through the container.
- resonance means for bringing the coil in resonance according to the method of any of the preceding claims.

7. Device according to claim 6, wherein the coil is a flat coil arranged to a support surface and wherein the container is positioned on the support surface.

8. Device according to claim 6, wherein the container is arranged on the inside of the coil.

9. Device according to claim 8, wherein the container has a cylindrical wall and wherein the coil is arranged on or in the cylindrical wall.

10. Device according to any of the claims 6 - 9, wherein the container is a tube through which a continuous flow of organic fluid, in particular milk, can be pumped.
